Europäisches Patentamt

(19) European Patent Office

Office européen des brevets

(11) Publication number: **0 082 176**
**B1**

## (12) EUROPEAN PATENT SPECIFICATION

(45) Date of publication of patent specification: **02.04.86**

(21) Application number: **82901976.9**

(22) Date of filing: **05.07.82**

(86) International application number:
**PCT/GB82/00196**

(87) International publication number:
**WO 83/00194 20.01.83 Gazette 83/02**

(51) Int. Cl.⁴: **F 03 D 5/00**

(54) VERTICAL AXIS WIND TURBINES.

(30) Priority: **03.07.81 GB 8120583**

(43) Date of publication of application:
**29.06.83 Bulletin 83/26**

(45) Publication of the grant of the patent:
**02.04.86 Bulletin 86/14**

(84) Designated Contracting States:
**AT BE CH DE FR LI NL SE**

(56) References cited:
**WO-A-81/01443**
**DE-B-1 120 390**
**DE-C- 883 429**

(73) Proprietor: **THE OPEN UNIVERSITY**
**P.O. Box 252 Walton Hall Walton**
**Milton Keynes Buckinghamshire MK7 6BP (GB)**

(72) Inventor: **TAYLOR, Derek Alan**
**85 Waterside Peartree Bridge**
**Milton Keynes Buckinghamshire (GB)**

(74) Representative: **Thomson, Roger Bruce et al**
**POLLAK MERCER & TENCH High Holborn House**
**52-54 High Holborn**
**London WC1V 6RY (GB)**

Courier Press, Leamington Spa, England.

EP 0 082 176 B1

## Description

This invention relates to vertical axis wind turbines.

Various different types of vertical axis wind turbine are already known, including those of the Darrieus type with symmetrical airfoil blades arranged around a central mast or tower.

One prior art wind turbine is described in DE—C—883429. This shows the use of a split blade mounted in cantilever manner on a hub, with the blade being without external support above the level of the hub and having its arms extending upwards in an inclined manner from the hub during rotation of the blade. However, this known wind turbine operates on differential drag principles, not on aerodynamic lift principles, and the split blade sweeps out a generally elliptical path.

Other wind turbines are described in DE—B—1120390 and WO—A1—81/01443.

In accordance with the present invention there is provided a vertical axis wind turbine comprising a support tower defining a vertical axis of rotation, one or more blades mounted directly on a pivot hub at the top of said tower, the or each blade extending upwardly from the hub in an inclined manner away from the axis of rotation, and mounting means supporting the or each blade so that it is both rotatable about the vertical axis and also simultaneously pivotable about a horizontal axis passing through the vertical axis, characterised in that the blade or blades operate on aerodynamic lift principles, the rotating path of each portion of the or each blade is a circle the plane of which is horizontal and the centre of which lies on said vertical axis, and resilient bias means are provided acting on the or each blade in opposition to centrifugal forces to control the inclination of the blade or blades about the horizontal axis in dependence on changes in wind speed.

The blade or blades can be of either fixed or variable pitch.

Although the single blade version of the wind turbine is presently preferred, for reasons of simplicity and ease of construction, multiple blade turbines may alternatively be used within the scope of the invention.

The single cantilevered blade wind turbine in accordance with the invention, mounted on a rigid hub, performs in generally the same manner as the Darrieus type of vertical turbine with symmetrical airfoil blades, but unlike such conventional wind turbines does not require blade support arms or long shafts with top bearings.

The single cantilevered blade version of the wind turbine of the present invention, with a pivot hub mounting, additionally gives a variable solidity and variable geometry configuration which improves the control of the wind turbine. This means that one has an improved starting capability when the blade is only a few degrees off vertical. As the wind speed approaches the optimum level, the blade is progressively moved to a more inclined operating position automatically by centrifugal force acting against a spring. In winds which are stronger than the optimum level, the blade is further inclined towards the horizontal so that the swept volume is considerably reduced in order to minimise bending stresses in the structure.

The cantilevered blade wind turbine of the present invention has a number of advantages, both in comparison with horizontal axis wind turbines and in comparison with other known vertical axis wind turbines.

Firstly, the wind turbine of the present invention does not need to be directed into the wind, unlike horizontal axis wind turbines, which means that one does not need to provide a system which will compensate for yaw, thus considerably reducing the cost. Moreover, unlike horizontal axis wind turbines, the wind turbine of the present invention experiences no gyroscopic or fluctuating gravitational loads, which means that comparatively lightweight blades can be used, again with cost savings.

In the case of wind turbines of the present invention which have the blade or blades mounted on a pivot hub, the variable solidity, variable geometry configuration is self-starting and inherently self-regulating in high winds, thus reducing bending stresses and enabling one to use lighter, and hence cheaper, blades.

With the cantilevered blade wind turbine of the present invention one can use very simple straight untwisted blades, thereby again reducing construction costs. Existing helicopter and horizontal axis wind turbine blade and hub technolgy can also be used.

One of the major problems of conventional wind turbines is the need to build a very tall tower on which to mount the blade system. With the wind turbine of the present invention much shorter towers can be used than for conventional wind turbines. As the cost of the tower can amount to as much as 30% of the total cost of the installation, a considerable capital cost saving can therefore be achieved.

A further important advantage of the wind turbine of the present invention is that for a given swept volume the amount of blade material which is required is much less than with existing types of vertical axis wind turbine, again resulting in lower blade costs.

Because with the construction according to the present invention the tower which carries the hub on which the blade or blades is/are mounted does not intrude into the swept volume, the tower does not cause any turbulence on the downward portion of the rotational path of the blade or blades. Such turbulence can result in a considerable loss of efficiency. The improved construction of the wind turbine of the present invention can result in a correspondingly higher efficiency, particularly as the or each blade crosses the swept volume twice in each rotational cycle. The further improves the blade material/swept volume ratio.

In order that the invention may be fully understood, a number of embodiments of vertical axis wind turbine in accordance with the invention will now be described by way of example and with reference to the accompanying schematic drawings, in which:

Figs. 1a, 1b and 1c are front, side and plan views respectively of a first embodiment of vertical axis wind turbine in accordance with the invention, comprising a single cantilevered blade mounted on a pivot hub;

Figs. 2a, 2b and 2c are front, side and plan views respectively of a second embodiment of wind turbine in accordance with the invention, comprising two cantilevered blades mounted on a pivot hub;

Figs. 3a, 3b and 3c are front, side and plan views respectively of a third embodiment of wind turbine in accordance with the invention, comprising a single double-arm blade mounted as a beam on a pivot hub;

Figs. 4a, 4b and 4c are front, side and plan views respectively of a fourth embodiment of wind turbine in accordance with the invention, comprising two double-arm blades mounted in an X-configuration on a pivot hub;

Figs. 5a to 5d show alternative configurations of wind turbine in accordance with the invention using a single blade mounted on a fixed hub;

Figs. 6a to 6d show alternative constructions of wind turbine in accordance with the invention incorporating a single double-arm blade mounted on a fixed hub;

Figs. 7a to 7f show further configurations of wind turbine in accordance with the invention, each comprising two blades mounted in a fixed hub;

Fig. 8a to 8d show yet further constructions of wind turbine in accordance with the invention, each comprising multiple blades of generally X-shaped configuration and mounted on a fixed hub; and,

Fig. 9 is a schematic illustration of the application of the wind turbine of the present invention to a ship for propulsion.

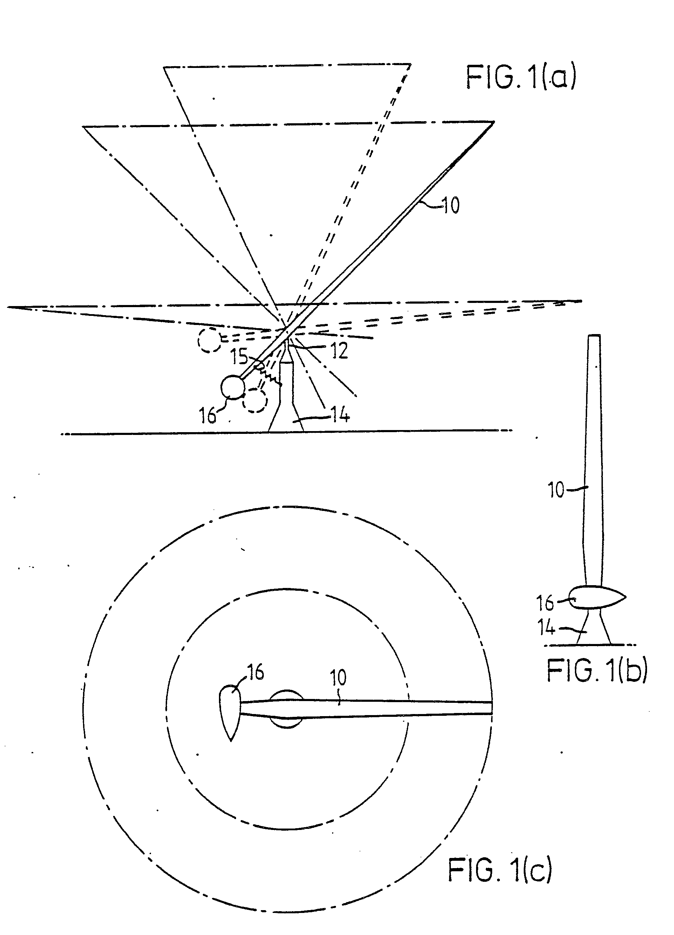

Referring first to Figs. 1a to 1c, these show a single cantilevered blade 10 mounted on a pivot hub 12 at the top of a tower 14. The end of the short arm of the blade 10 is provided with a counterweight 16. The blade can be of fixed pitch or variable pitch. A spring 15 is connected between the tower and the shorter arm of the blade to counter the centrifugal force which is generated as the blade is rotated around the pivot hub by the wind. It will be appreciated that the blade is without support above the level of the hub, and that the arm extends freely upwards in an inclined manner from the hub. The drawing also illustrates how in this embodiment the volume swept out by the blade 10 changes as the wind speed increases. In other words, as the wind speed increases, so the blade 10 is moved progressively downwards towards a generally horizontal position, thus reducing the volume swept out by the longer arm of the rotating blade, here indicated by chain-dotted lines. It will be appreciated from the drawing that the tower 14 does not intrude into the volume swept out by the blade 10 and that a relatively short tower in comparison with the length of the blade can be used.

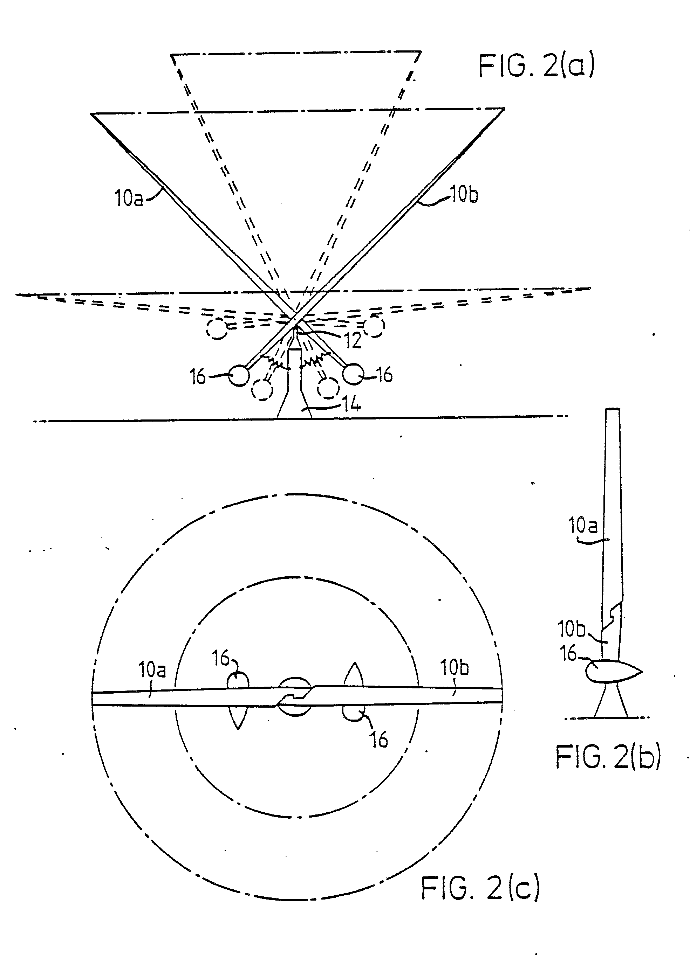

In Figs. 2a to 2c, a pair of cantilever blades 10a and 10b are mounted on a pivot hub 12 on a tower 14. Each blade is provided with its own counterweight 16. This arrangement is essentially just a doubling up of the arrangement shown in Fig. 1. The two blades are each provided with a recessed region adjacent to their crossing point so that they lie in a common plane, as shown in Figs. 2b and 2c.

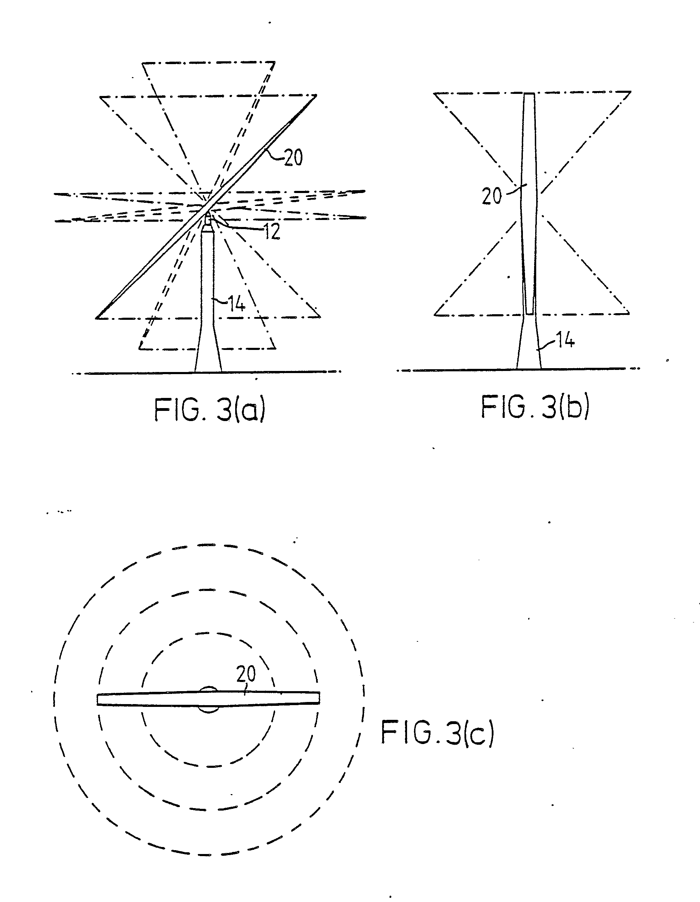

Figs. 3a to 3c show an arrangement in which a single blade 20 is provided on the pivot hub 12 on the tower 14. The blade 20 in this case is formed as a double-armed beam which is pivoted at its centre. It is of course necessary in this arrangement that the tower is considerably taller than that used in the preceding embodiments. The swept volume is again indicated by chain-dotted lines and is here in the form of a double cone.

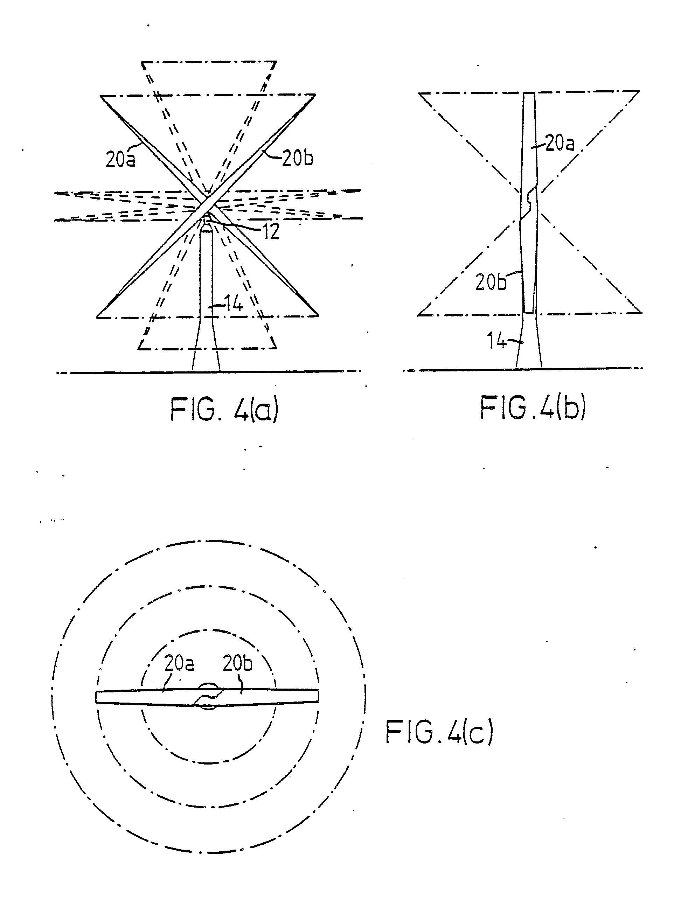

Figs. 4a to 4c show an arrangement which is essentially a doubling up of the construction shown in Figs. 3a to 3c, in which a pair of blades 20a and 20b are mounted in an X-configuration on the pivot hub 12, with the blades lying in a common plane.

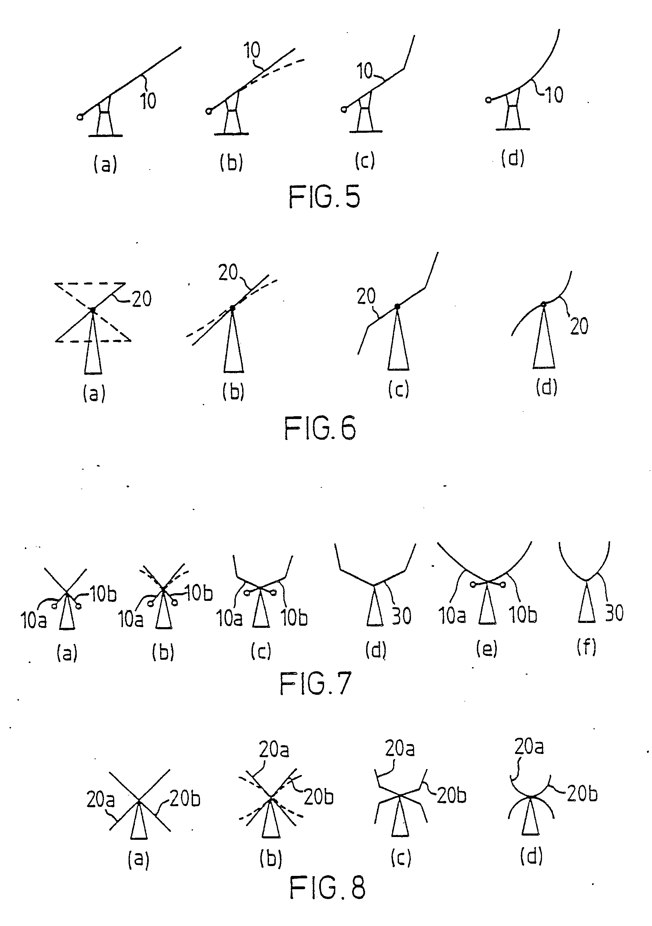

Reference is now made to the alternative constructions shown in Figures 5 to 8. In each of these schematic diagrams the blade or blades are shown mounted on a rigid hub. However, it should be appreciated that in every case the blade or blades could alternatively be mounted on a pivot hub, generally with some advantage, in that one thereby achieves a variable solidity and variable geometry configuration which improves the control of the wind turbine and improves both its starting and running capabilities.

Fig. 5 shows variations of the arrangement of Fig. 1. Fig. 5a shows the use of a straight blade 10. Fig. 5b shows the use of a flexing blade 10 which enables one to achieve some degree of variable geometry. Fig. 5c shows a cranked blade 10. Fig. 5d shows the use of a curved blade 10.

In Fig. 6 various types of double-arm beam-balance blade are shown, based on Fig. 3. Fig. 6a corresponds generally to Fig. 3. Fig. 6b shows the use of a flexing blade 20. Fig. 6c shows the use of a cranked blade 20. Fig. 6d shows the use of a curved blade 20 of generally S-shape.

Fig. 7 shows various embodiments of double-blade wind turbine with the two blades in U-shaped, V-shaped or scissors configurations. Fig. 7a corresponds generally to Fig. 2. Fig. 7b shows the use of flexing blades 10a, 10b arranged in scissors configuration. Fig. 7c shows the use of two cranked blades 10a, 10b. Fig. 7d shows the use of one continuous cranked blade 30 of generally U-shaped configuration. Fig. 7e shows the use of two curved blades 10a, 10b, and Fig. 7f shows the use of a continuous curved blade 30 of generally U-shaped configuration.

The embodiments shown in Fig. 8 show alternative arrangements for two blades arranged in an X-configuration. Fig. 8a corresponds generally to Fig. 4. Fig. 8b shows the use of flexing blades 20a, 20b; Fig. 8c shows the use of two cranked blades 20a, 20b; and Fig. 8d shows the use of two curved blades 20a, 20b.

In addition to being able to provide power for land-based needs the vertical axis wind turbine of the present invention can be used to propel many kinds of boats and ships, either as the main form of propulsion or, as is more likely, in the cargo-carrying fleets, as a fuel-saving mechanism that can operate in parallel with conventional engines.

Either by generating electricity and driving waterscrews electrically, or by direct mechanical drive, it is possible to propel a ship in any direction regardless of the direction of wind, and even directly into the wind.

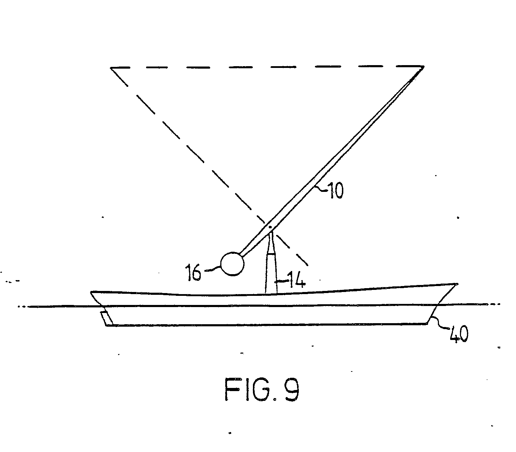

Fig. 9 illustrates the mounting of a wind turbine of the present invention on a ship 40.

All the advantages of the wind turbine outlined for its land-based mode also apply in marine propulsion, i.e. omnidirectional operation, relatively short mast and stress-relieving action due to an inclining blade or blades. In addition, the vertical axis configuration may also provide direct thrust in an "autogyro" mode so that it can also operate similarly to a conventional sailing ship.

**Claims**

1. A vertical axis wind turbine comprising a support tower (14) defining a vertical axis of rotation, one or more blades (10, 10a, 10b, 20, 20a, 20b, 30) mounted directly on a pivot hub (12) at the top of said tower, the or each blade extending upwardly from the hub in an inclined manner away from the axis of rotation, and mounting means supporting the or each blade so that it is both rotatable about the vertical axis and also simultaneously pivotable about a horizontal axis passing through the vertical axis, characterised in that the blade or blades operate on aerodynamic lift principles, the rotating path of each portion of the or each blade is a circle the plane of which is horizontal and the centre of which lies on said vertical axis, and resilient bias means (15) are provided acting on the or each blade in opposition to centrifugal forces to control the inclination of the blade or blades about the horizontal axis in dependence on changes in wind speed.

2. A vertical axis wind turbine as claimed in claim 1, characterised in that the or each blade (10,10a,10b,20,20a,20b,30) is of fixed pitch.

3. A vertical axis wind turbine as claimed in claim 1, characterised in that the or each blade (10,10a,10b,20,20a,20b,30) is of variable pitch.

4. A vertical axis wind turbine as claimed in any preceding claim, characterised in that the or each blade has a long arm projecting upwardly from the hub (12) and a relatively short counterbalanced arm extending below the level of the hub.

5. A vertical axis wind turbine as claimed in claim 4, characterised by a second such blade, with the two blades arranged in a crossed configuration so as to be pivotable about the same horizontal axis.

6. A vertical axis wind turbine as claimed in any of claims 1 to 3, characterised by a double-armed blade mounted as a balanced beam on the hub (12).

7. A vertical axis wind turbine as claimed in claim 6, characterised in that the arms of the blade are of equal length.

8. A vertical axis wind turbine as claimed in claim 6 or 7, characterised by a second such blade, with the two blades arranged in a crossed configuration so as to be pivotable about the same horizontal axis.

9. A vertical axis wind turbine as claimed in any preceding claim, characterised in that the or each blade is capable of flexing movement.

10. A vertical axis wind turbine as claimed in any of claims 1 to 8, characterised in that the or each blade is cranked above the level of the hub (12).

11. A vertical axis wind turbine as claimed in any of claims 1 to 8, characterised in that the or each blade is curved from the hub mounting towards the upward free end.

12. A vertical axis wind turbine as claimed in any preceding claim, characterised in that the tower (14) does not intrude into the swept volume of the blade or blades.

**Patentansprüche**

1. Windmotor mit senkrechter Drehachse, umfassend einen Stützturm (14), der die vertikale Drehachse bildet, ein oder mehrere Blätter (10, 10a, 10b, 20, 20a, 20b, 30), die direkt auf einer Drehnabe (12) an der Oberseite des Turmes angebracht sind, wobei das oder jedes Blatt von der Nabe auf schräge Weise weg von der Drehachse nach oben verläuft, und Befestigungsmittel zum Abstützen des oder der Blätter so, dass es sowohl um die vertikale Achse als auch gleichzeitig um eine durch diese vertikale Achse verlaufende horizontale Achse drehbar ist, dadurch gekennzeichnet, dass das Blatt oder die Blätter nach dem aerodynamischen Auftriebsprinzip arbeiten, dass der Drehverlaufsweg jedes Abschnittes des oder jedes Blattes ein Kreis ist, dessen Ebene horizontal ist und dessen Mitte auf der vertikalen Achse liegt, und dass elastisch nachgiebige Vorspannmittel (15) vorgesehen sind, die entgegen den Zentrifugalkräften auf das oder jedes Blatt einwirken, um die Neigung des Blattes oder der Blätter in Abhängigkeit von Änderungen der Windgeschwindigkeit zu steuern.

2. Windmotor nach Anspruch 1, dadurch gekennzeichnet, dass das oder Blatt (10, 10a, 10b, 20, 20a, 20b, 30) eine feste Steigung hat.

3. Windmotor nach Anspruch 1, dadurch gekennzeichnet, dass das oder jedes Blatt (10, 10a, 10b, 20, 20a, 20b, 30) eine variable Steigung hat.

4. Windmotor nach einem der vorhergehenden Ansprüche, dadurch gekennzeichnet, dass das oder jedes Blatt einen langen Arm aufweist, der von der Nabe (12) nach oben ragt, sowie einen relativ kurzen Ausgleichsarm, welcher unterhalb des Niveaus der Nabe verläuft.

5. Windmotor nach Anspruch 4, gekennzeichnet durch ein zweites derartiges Blatt, wobei die beiden Blätter in einer überkreuzten Konfiguration so angeordnet sind, dass sie um dieselbe horizontale Achse drehbar sind.

6. Windmotor nach einem der Ansprüche 1 bis 3, gekennzeichnet, durch ein doppelarmiges Blatt, welches als ausbalancierter Baum auf der Nabe (12) befestigt ist.

7. Windmotor nach Anspruch 6, dadurch gekennzeichnet, dass die Arme des Blattes gleiche Länge haben.

8. Windmotor nach Anspruch 6 oder 7, gekennzeichnet durch ein zweites derartiges Blatt, wobei die beiden Blätter in einer überkreuzten Konfiguration angeordnet sind, um so um dieselbe horizontale Achse drehbar zu sein.

9. Windmotor nach einem der vorhergehenden Ansprüche, dadurch gekennzeichnet, dass das oder jedes Blatt eine Biegebewegung vollziehen kann.

10. Windmotor nach einem der Ansprüche 1 bis 8, dadurch gekennzeichnet, dass das oder jedes Blatt oberhalb des Niveaus der Nabe (12) gekröpft ist.

11. Windmotor nach einem der Ansprüche 1 bis 8, dadurch gekennzeichnet, dass das oder jedes Blatt von der Nabenbefestigung in Richtung auf das obere freie Ende gekrümmt ist.

12. Windmotor nach einem der vorhergehenden Ansprüche, dadurch gekennzeichnet, dass der Turm (14) nicht in den Drehraum des Blattes oder der Blätter eindringt.

**Revendications**

1. Eolienne à axe vertical comprenant une tour (14) de support définissant un axe vertical de rotation, une ou plusieurs pales (10, 10a, 10b, 20, 20a, 20b, 30) montées directement sur un moyeu (12) de pivot au sommet de ladite tour, la ou chaque pale s'étendant vers le haut à partir du moyeu, d'une manière inclinée en s'éloignant de l'axe de rotation, et des moyens de montage supportant la ou chaque pale afin qu'elle puisse à la fois tourner autour de l'axe vertical et aussi, simultanément, pivoter autour d'un axe horizontal passant par l'axe vertical, caractérisée en ce que la pale ou les pales fonctionnent sur des principes de portance aérodynamique, la trajectoire de rotation de chaque partie de la ou de chaque pale est un cercle dont le plan est horizontal et le centre est situé sur ledit axe vertical, et des moyens élastiques de rappel (15) sont prévus et agissant sur la ou chaque pale en opposition aux forces centrifuges afin de régler l'inclinaison de la pale ou des pales autour de l'axe horizontal en fonction des variations de la vitesse du vent.

2. Eolienne à axe vertical selon la revendication 1, caractérisée en ce que la ou chaque pale (10, 10a, 10b, 20, 20a, 20b, 30) est d'un pas fixe.

3. Eolienne à axe vertical selon la revendication 1, caractérisée en ce que la ou chaque pale (10, 10a, 10b, 20, 20a, 20b, 30) est d'un pas variable.

4. Eolienne à axe vertical selon l'une quelconque des revendications précédentes, caractérisée en ce que la ou chaque pale comporte un long bras faisant saillie vers le haut du moyeu (12) et un bras d'équilibrage relativement court s'étendant au-dessous du niveau du moyeu.

5. Eolienne à axe vertical selon la revendication 4, caractérisée par une seconde pale, les deux pales étant agencées en configuration croisée afin de pouvoir pivoter autour du même axe horizontal.

6. Eolienne à axe vertical selon l'une quelconque des revendications 1 à 3, caractérisée par une pale à deux bras montée à la manière d'un fléau équilibré sur le moyeu (12).

7. Eolienne à axe vertical selon la revendication 6, caractérisée en ce que les bras de la pale sont de longueur égale.

8. Eolienne à axe vertical selon la revendication 6 ou 7, caractérisée par une seconde pale, les deux pales étant agencées en configuration croisée afin de pouvoir pivoter sur le même axe horizontal.

9. Eolienne à axe vertical selon l'une quelconque des revendications précédentes, caractérisée en ce que la ou chaque pale est capable d'un mouvement de flexion.

10. Eolienne à axe vertical selon l'une quelconque des revendications 1 à 8, caractérisée en ce que la ou chaque pale est coudée au-dessus du niveau du moyeu (12).

11. Eolienne à axe vertical selon l'une quelconque des revendications 1 à 8, caractérisée en ce que la ou chaque pale est incurvée à partir du montage sur le moyeu vers l'extrémité libre supérieure.

12. Eolienne à axe vertical selon l'une quelconque des revendications précédentes, caractérisée en ce que la tour (14) n'engage pas le volume balayé par la pale ou les pales.

FIG.1(a)

FIG.1(b)

FIG.1(c)

0 082 176

FIG. 2(a)

10a    10b

12

16    16

14

FIG. 2(b)

10a

10b

16

FIG. 2(c)

10a    16    10b

16

2

FIG. 3(a)

FIG. 3(b)

FIG.3(c)

FIG. 4(a)

FIG. 4(b)

FIG. 4(c)

(a)　　　(b)　　　(c)　　　(d)

FIG.5

(a)　　　(b)　　　(c)　　　(d)

FIG.6

(a)　　(b)　　(c)　　(d)　　(e)　　(f)

FIG.7

(a)　　　(b)　　　(c)　　　(d)

FIG.8

FIG. 9